## Europäisches Patentamt

## European Patent Office

## Office européen des brevets

(11) Publication number: **0 036 222**
**B1**

(12) **EUROPEAN PATENT SPECIFICATION**

(45) Date of publication of patent specification: **10.07.85**

(21) Application number: **81200102.2**

(22) Date of filing: **27.03.79**

(60) Publication number of the earlier application in accordance with Art. 76 EPC: **0 004 476**

(51) Int. Cl.⁴: **G 11 B 7/08, G 11 B 7/00**

(54) **Focus servo system and focussing method.**

(30) Priority: **27.03.78 US 890670**

(43) Date of publication of application:
**23.09.81 Bulletin 81/38**

(45) Publication of the grant of the patent:
**10.07.85 Bulletin 85/28**

(84) Designated Contracting States:
**BE CH DE FR GB IT NL SE**

(56) References cited:
**DE-A-2 649 688**
**US-A-3 952 191**
**US-A-3 974 327**
**US-A-3 997 715**

(73) Proprietor: **DISCOVISION ASSOCIATES**
**3300 Hyland Avenue**
**Costa Mesa California 92626 (US)**

(72) Inventor: **Ceshkovsky, Ludwig**
**10435, Morning Glory Avenue**
**Fountain Valley California (US)**
Inventor: **Dakin, Wayne Ray**
**816, Camino Real**
**20, Redondo Beach California (US)**

(74) Representative: **Arthur, George Fitzgerald et al**
**KILBURN & STRODE 30, John Street**
**London WC1N 2DD (GB)**

Courier Press, Leamington Spa, England.

## Description

This invention relates to focus servo systems and methods for use in a player apparatus for recovering information recorded on a video disc or other information bearing surface, which apparatus includes a lens for focusing a beam of radiation on the surface.

The present application has been divided from Application No. 79300489.6 published on the 3rd October, 1977, under the No. 4476. That application described generally apparatus including an optical system for impinging a source beam of radiation upon tangentially arranged information tracks on a surface of a disc at a selected location to produce a reflected modulated beam of radiation containing the information, and signal recovery means for recovering the information from the modulated beam and for producing an electrical signal representative of the information.

An object of the present invention is to provide an effective means of achieving focus of the beam on the surface.

German OS 2649688 (Thomson-Brandt) discloses a system for achieving focus of a lens in a disc player in which a ramp signal is used to drive the lens through a range of positions including the optimum focus portion, and a F.M. information detector is used to switch focusing to a closed loop mode when focus is approached. When the F.M. signal is lost showing loss of focus, the lens is driven by a ramp signal in the opposite sense to try to regain focus.

According to the present invention a focus servo system includes focus error detecting means for detecting the position of the lens in relation to an optimum focus position and for generating a focus error signal, a lens driver, a ramp generator coupled to the lens driver for causing the lens to move over a range including the optimum focus position and is characterised by kick-back means for superimposing a relatively high frequency oscillatory motion of the lens due to the generated ramp signal, as set out in claim 1.

The high frequency oscillatory motion superimposed on the ramp motion when focus is approached gives the focus servo several opportunities to achieve focus in one ramp cycle whereas in the prior Thomson-Brandt method, if focus was not achieved, it was necessary to use a fresh ramp cycle in a further attempt.

The invention also includes a corresponding method of focusing in such player apparatus, as set out in claim 7.

The invention may be carried into practice in various ways, and one embodiment will be described by way of example with reference to the accompanying drawings in which:—

FIGURE 1 is identical with FIGURE 1 of the parent application and is a generalised block diagram of a video disc player;

FIGURE 2 is a schematic diagram of the optical system employed in the video disc player shown in FIGURE 1; and is identical with FIGURE 2 of the parent application;

FIGURE 3 is a generalised block diagram of the signal recovery subsystem shown at 30 (and marked FIGURE 7) in FIGURE 1;

FIGURE 4 is a set of waveforms occurring in the FM signal processing subsystem shown in FIGURE 3;

FIGURE 5 is a block diagram of the focus servo subsystem in FIGURE 1; and

FIGURES 6A and 6B show a plurality of waveforms and utilised in explaining the operation of the focus servo subsystem shown in FIGURE 5.

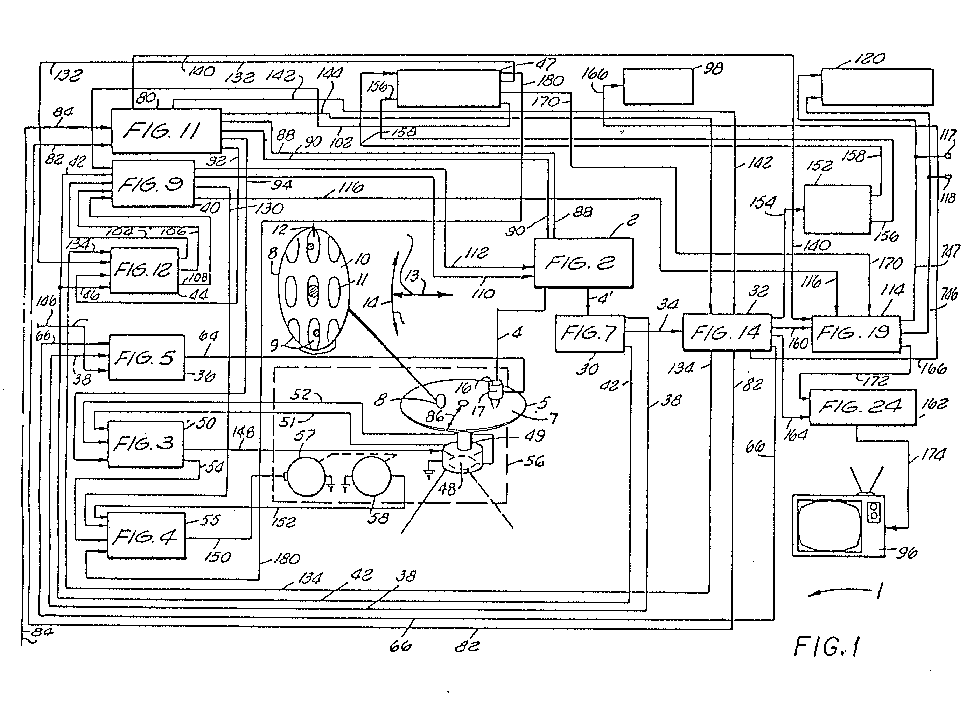

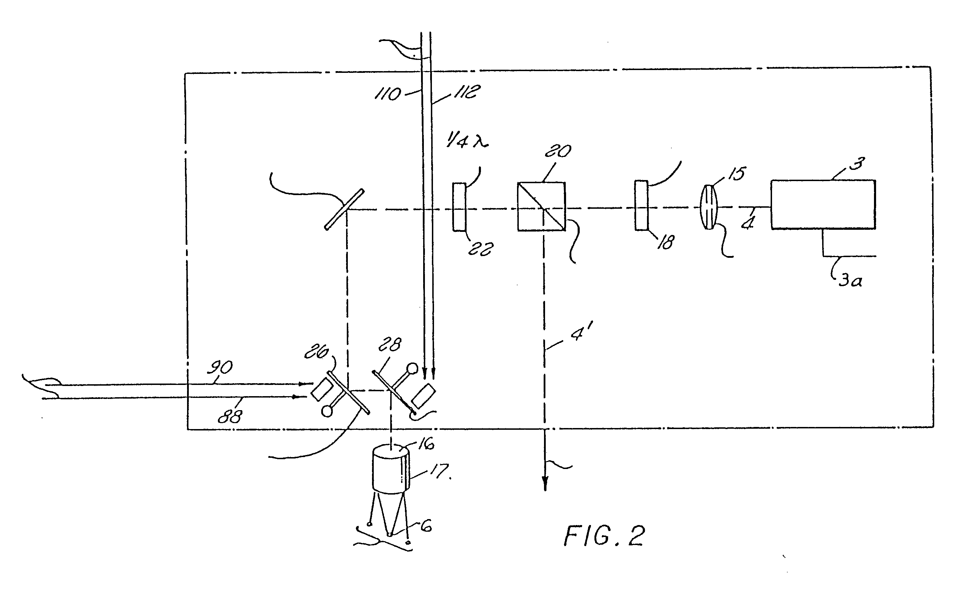

Referring to FIGURE 1, there is shown a schematic block diagram of a video disc player system indicated generally at 1. The player 1 employs an optical system indicated at 2 and shown in greater detail in FIGURE 2.

Referring collectively to FIGURES 1 and 2, the optical system 2 includes a read laser 3 employed for generating a read beam 4 which is used for reading a frequency modulated encoded signal stored on a video disc 5. The read beam 4 is polarised in a predetermined direction. The read beam 4 is directed to the video disc 5 by the optical system 2. An additional function of the optical system 2 is to focus the light beam down to a spot 6 at its point of impingement with the video disc 5.

A portion of an information bearing surface 7 of the video disc 5 is shown enlarged within a circle 8. A plurality of information tracks 9 are formed on the video disc 5. Each track is formed with successive light reflective regions 10 and light non-reflective regions 11. The direction of reading is indicated by an arrow 12. The read beam 4 has two degrees of movement, the first of which is in the radial direction as indicated by a double headed arrow 13; the second of which is the tangential direction as indicated by a double headed arrow 14. The double heads of each of the arrows 13 and 14 indicate that the read beam 4 can move in both directions in each of the radial and tangential directions.

Referring to FIGURE 2, the optical system comprises a lens 15 employed for shaping the beam to fully fill an entrance aperture 16 of a microscopic objective lens 17. The objective lens is employed for forming the spot 6 of light at its points of impingement with the video disc 5. Improved results have been found when the entrance aperture 16 is overfilled by the reading beam 4. This results in maximum light intensity at the spot 6.

For further details of the apparatus of FIGURE 1, reference may be made to publication No. 4476.

The present invention is concerned with the focus servo subsystem indicated generally at 36 in FIGURE 1.

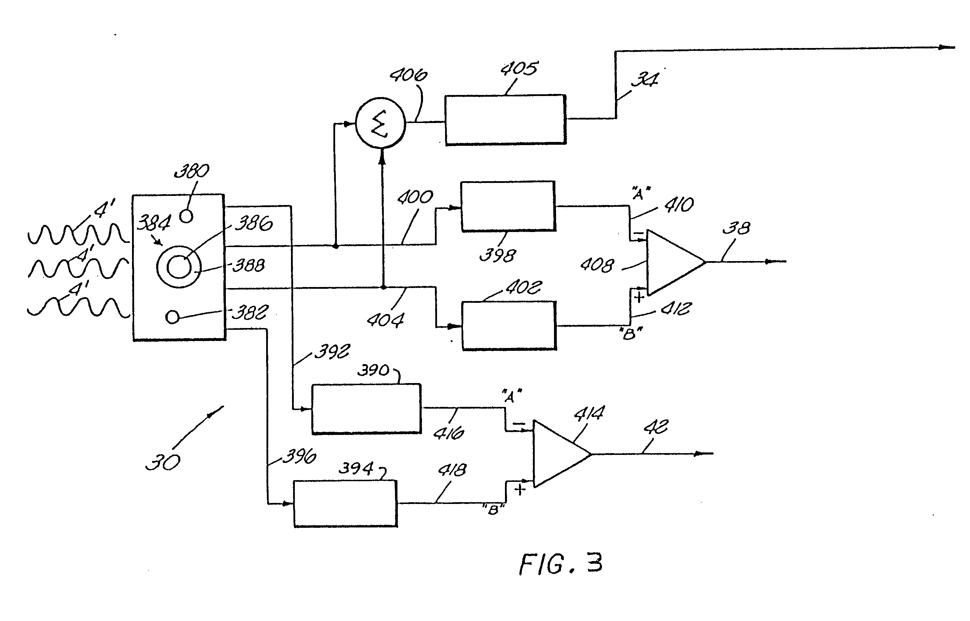

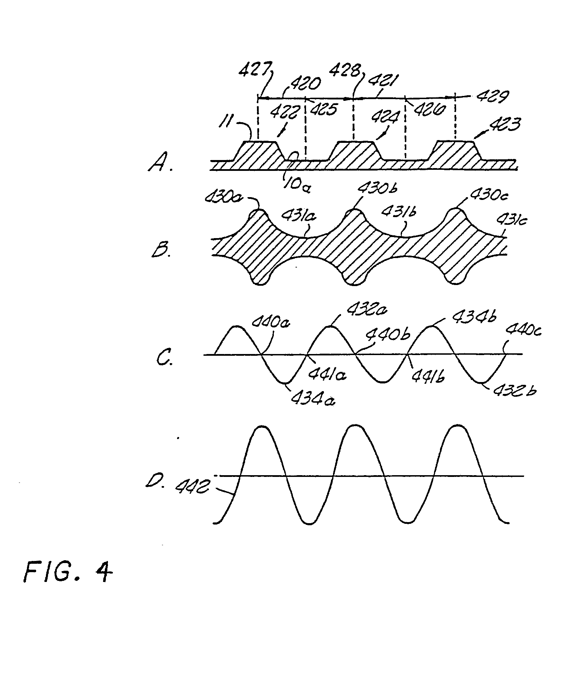

Referring to FIGURE 3 (which is identical with FIGURE 7 of Publication No. 4476), there is shown a schematic block diagram of the signal recovery subsystem 30. The waveforms shown in FIGURE 4 (identical with FIGURE 8 of 4476) Lines B, C, and D illustrate certain of the electrical waveforms available within the signal recovery subsystem 30 during the normal operation of the player. A full description of the signal recovery subsystem is included in Publication No. 4476, but sufficient description is included here to show signals are derived for the focus subsystem.

The reflector light beam is divided into three principal beams. A first beam impinges upon a first tracking photodetector indicated at 380, a second portion of the read beam 4' impinges upon a second tracking photodetector 382 and the central information beam is shown impinging upon a concentric ring detector indicated generally at 384. The concentric ring detector 384 has an inner portion at 386, and an outer portion at 388 respectively.

The output from the first racking photodetector 380 is applied to a first tracking preamp 390 over a line 392. The output from the second tracking photodetector 382 is applied to a second tracking preamp 394 over a line 396. The output from the inner portion 386 of the concentric ring detector 384 is applied to a first focus preamp 398 over a line 400. The output from the outer portion 388 of the concentric ring detector 384 is applied to a second focus preamp 402 over a line 404. The output from both portions 286 and 388 of the concentric ring focusing element 384 are applied to a wide band amplifier 405 over a line 406. The output from the wide band amplifier 405 is the time base error corrected frequency modulated signal for application to the FM processing subsystem 32 over the line 34.

The output from the first focus preamp 398 is applied as one input to a differential amplifier 408 over a line 410. The output from the second focus preamplifer 402 forms the second input to the differential amplifier 408 over the line 412. The output from the differential amplifier 408 is the differential focus error signal applied to the focus servo subsystem 36 over the line 38.

Line A of FIGURE 4 shows a cross-sectional view taken in a radial direction across a video disc 5. Light non-reflective elements are shown at 11 and intertrack regions are shown at 10a. Such intertrack regions 10a are similar in shape to light reflective elements 10. The light reflective regions 10 are planar in nature and normally are highly polished surfaces, such as a thin aluminium layer. The light non-reflective regions 11 in the preferred embodiment are light scattering and appear as bumps or elevations above the planar surface represented by the light reflective regions 10. The lengths of the line indicated at 420 and 421 shows the centre-to-centre spacing of two adjacently positioned tracks 422 and 423 about a central track 424. A point 425 in the line 420 and a point 426 in the line 421 represents the crossover point between each of the adjacent tracks 422 and 423 when leaving the central track 424 respectively. The crossover points 425 and 426 are each exactly halfway between the central track 424 and the track 422 and 423 respectively. The end points of line 420 represented at 427 and 428 represent the centre of information tracks 422 and 424, respectively. The end of line 421 at 429 represents the centre of information track 423.

The waveform shown in line B of Figure 4 represents an idealized form of the frequency modulated signal output derived from the modulated light beam 4' during radial movement of the read beam 6 across the tracks 422, 424 and 423. This shows that a maximum frequency modulated signal is available at the area indicated generally at 430a, 430b and 430c which correspond to the centres 427, 428 and 429 of the information tracks 422, 424 and 423, respectively. A minimum frequency modulated signal is available at 431a and 431b which corresponds to the crossover points 425 and 426. The waveform shown on line B of Figure 4 is generated by radially moving a focused lens across the surface of the video disc 5.

Referring to line C of Figure 4, there is shown the differential tracking error signal generated in the differential amplifier 414 shown in Figure 3. The differential tracking error signal is the same as that shown in line A of Figure 6C except for the details shown in the Figure 6C for purposes of explanation of the focus servo subsystem peculiar to that mode of operation.

Referring again to line C of Figure 4, the differential tracking error signal output shows a first maximum tracking error at a point indicated at 432a or 432b which is intermediate the centre 428 of an information track 424 and the crossover point indicated at 425 or 426 depending on the direction of beam travel from the central track 424. A second maximum tracking error is also shown at 434a and 434b corresponding to track locations intermediate the crossover points 425 and 426 between the information track 424 and the next adjacent tracks 422 and 423. Minimum focus error is shown in line C at 440a, 440b and 440c corresponding to the centre of the information tracks 422, 424 and 423, respectively. Minimum tracking error signals are also shown at 441a and 441b corresponding to the crossover points 425 and 426, respectively. This corresponds with the detailed description given with reference to Figure 6C as to the importance of identifying which of the minimum differential tracking error signal outputs corresponds with the centre of track location so as to ensure proper focusing on the centre of an information track and to avoid attempting to focus upon the track crossovers.

Referring to line D of Figure 4, there is shown the differential focus error signal output waveform generated by the differential amplifier 408. The waveform is indicated generally by a line 442 which moves in quadrature with the differential tracking error signal shown with reference to line C of Figure 4.

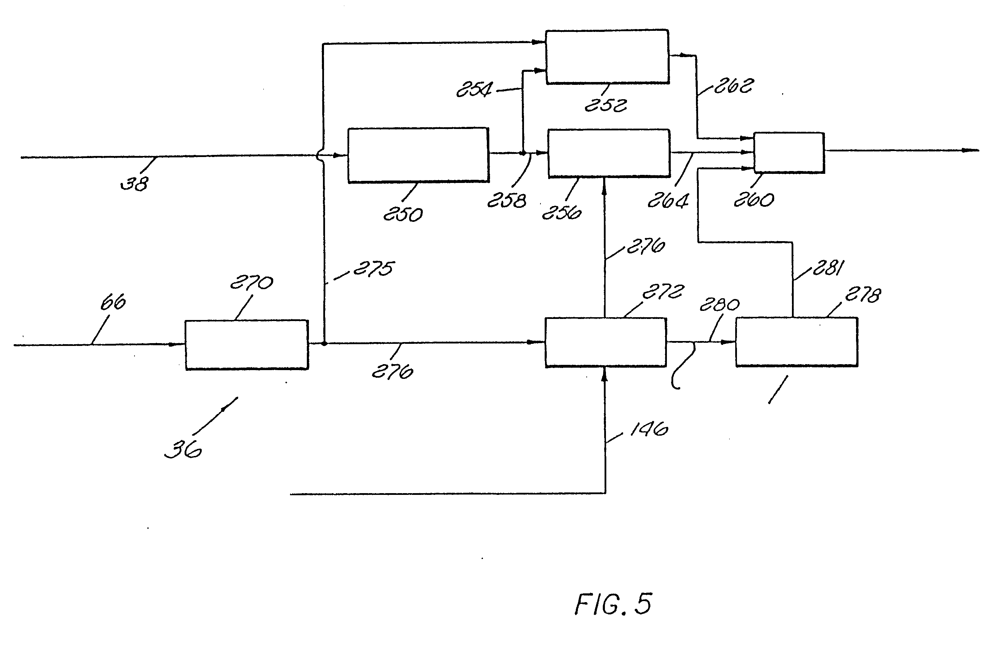

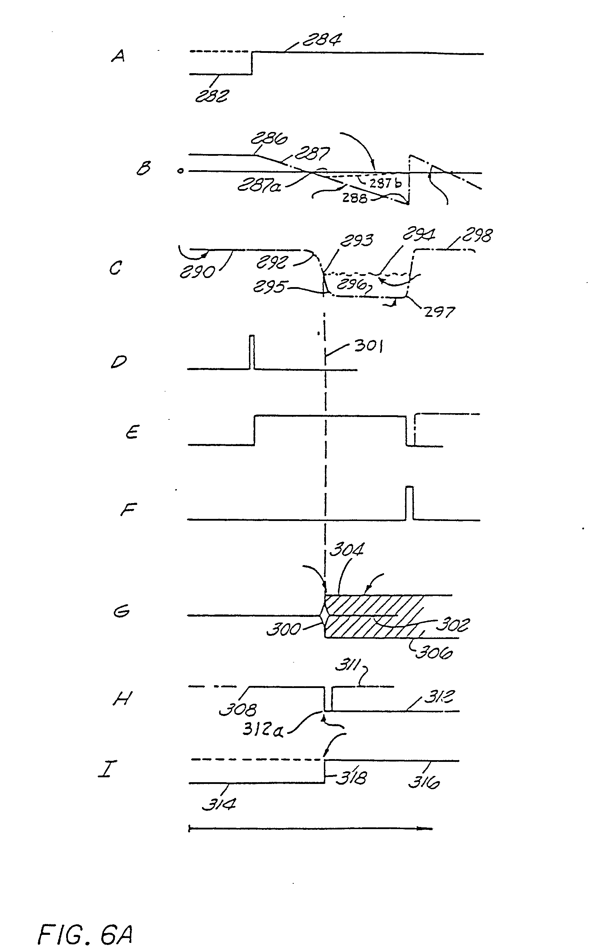

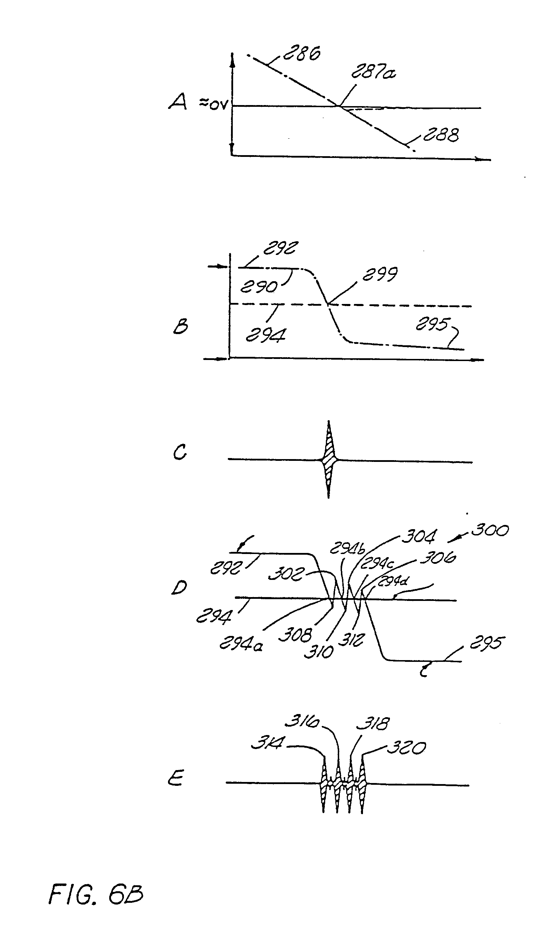

The focus servo subsystem 36, Figure 5, controls the movement of the lens 17 relative to the video disc 5. The lens driver includes a coil (not shown) moving the lens 17 under the direction of a plurality of separate electrical waveforms which are summed within the coil itself. These waveforms are completely described with reference to the description given for the focus servo subsystem in FIGURES 6A, 6B, and 6C. A voice coil arrangement as found in a standard loud speaker has been found to be suitable for controlling the up and down motion of the lens 17 relative to the video disc 5. The electrical signals for controlling the voice coil are generated by the focus servo subsystem 36 for application to the coil over a line 64.

The inputs to the focus servo subsystem are applied from a plurality of locations. The first input signal is applied from the signal recovery subsystem 30 over the line 38, and the second input signal is from the FM processing circuit 32 over a line 66. The FM processing subsystem 32 provides the frequency modulated signal read from the surface of the video disc 5. A third input signal over a line 146 is the ACQUIRE FOCUS enabling logic signal generated by the act of putting the player into its play mode by selection of a function PLAY button within the function generator 47.

The function of the focus servo subsystem 36 is to position the lens 17 at the optimum distance from the video disc 5 such that the lens 17 is able to gather and/or collect the maximum light reflected from the video disc 5, and modulated by the successively positioned light reflective regions 10 and light non-reflective regions 11. This optimum range is approximately 0.3 microns in length and is located at a distance of one micron above the top surface of the video disc 5.

The focus servo subsystem 36 utilises its three input signals in various combinations to achieve an enhanced focusing arrangement. The first is a differential focus error signal from the signal recovery subsystem 30; it provides an electrical representation of the relative distance between the lens 17 and the video disc 5. Unfortunately, the differential focus error signal is relatively small in amplitude and has a wave shape containing a number of positions thereon, each of which indicates that the proper point has been reached. All but one of such positions are not the true optimum focusing positions, but rather carry false information. Accordingly, the differential focus error signal itself is not the only signal employed to indicate the optimum focus condition. While the use of differential focus error itself can often result in the selection of the optimum focus position, it cannot do so reliably on every focus attempt. Hence, the combination of the differential focus error signal with the second signal indicative of reading a frequency modulated signal from the video disc 5 provides enhanced operation over the use of the differential focus error signal by itself.

During the focus acquiring mode of operation, the lens 17 is moving quickly towards the video disc 5. An uncontrolled lens detects a frequency modulated signal from the information carried by the video disc 5 in a very narrow spatial range known as the optimum focusing range.

An additional signal is an internally generated kickback signal which may be initiated in several ways, as explained later. This internally generated kickback pulse is combined with the first and second signals and applied to the voice coil so as to independently cause the lens to physically move back through the region at which a frequency modulated signal was read from the video disc 5. This internally generated fixed kickback pulse signal gives the lens 17 the opportunity to pass through the critical optimum focusing point a number of times during the first movement of the lens 17 towards the video disc 5.

FIGURES 5, 6 and 6A show a schematic block diagram of the focus servo subsystem 36, and a plurality of different waveforms which are employed with the focus servo subsystem. The focus error signal from the signal recovery subsystem 30 is applied to an amplifier and loop compensation circuit 250 over the line 38. The output from the amplifier and loop compensation circuit 250 is applied to a kickback pulse generator 252 over a line 254 and to a focus servo loop switch 256 over the lines 254 and a second line 258. The output from the kickback pulse generator 252 is applied to a driver circuit 260 over a line 262. The output from the focus servo loop switch 256 is applied to the driver circuit 260 over a line 264.

The FM video signal is applied from the distribution amplifier portion of the FM processing subsystem 32 to an FM level detector 270 over the line 66. The output from the FM level detector 270 is applied to an acquire focus logic circuit 272 over line 274. The output of the FM level detector 270 is applied as a second alternative input signal to the generator 252 over a line 275. The output from the acquire focus logic circuit is applied to the focus servo loop switch 256 over a line 276. A second output signal from the acquire focus logic circuit 272 is applied to a ramp generator circuit 278 over a line 280. The acquire focus logic circuit 272 has as its second input signal the acquire focus enable signal generated by the function generator 47 over the line 146. The output of the ramp generator 278 is applied to the driver circuit 260 over a line 281.

The acquire focus enable signal applied to the acquire focus logic circuit 272 over the line 146 is shown on line A of Figure 6A. Basically, this signal is a two-level signal generated by the function generator 47 and having a disabling lower condition indicated at 282 and an enabling condition indicated generally at 284. The function generator produces this pulse when the video disc player 1 is in one of its play modes and it is necessary to read the information stored on the video disc 5.

Referring to line B of Figure 6A, there is shown a typical ramping voltage waveform generated by the ramp generator circuit 278 on the line 281 to the driver 260. During the period of time corresponding to the disabling portion 282 of the acquire focus signal, the focus ramp waveform is in a quiescent condition. Coincidental with the turning on of the acquire focus enable signal, the ramp generator 278 generates its ramping voltage waveform shown as a sawtooth type output waveform 287 going from a higher position at 286 to a lower position at 288. This is shown as a linearly changing signal and has been found to be the most useful waveform for this purpose.

Referring to line C of Figure 6A, there is shown a representation of the motion of the lens itself. Prior to the generation of the acquire focus enable signal, the lens is in a retracted position indicated generally at 290. Upon the receipt of the acquire focus enable signal, the lens begins to move in a path indicated by the dash/dot line 292. The dash/dot line 292 begins at a point identified as the upper limit of lens travel and moves through an intersection with a dotted line 294. This point of intersection is identified as the lens in focus position 293. When focus is not acquired on the first attempt, were it not for the kickback signal, the lens would continue along the dash/dot line 292 to a point 295 identified as lower limit of lens travel and remain at the lower limit of lens travel through the portion of the line indicated generally at 296 to a point indicated at 297 (288 in Line B) identified as the RAMP RESET point. It would then be drawn back to the upper limit of lens travel portion of the waveform as indicated at 298 during ramp reset time.

The upper limit of lens travel position and the lower limit of lens travel position are sensed by limit switches (not shown) in the lens driver subassembly (not shown).

The waveform shown on line G of Figure 6A shows the wave shape of the signal applied to the FM level detector 270 over the line 66. The waveform shown on line G illustrates two principal conditions. In the first condition, i.e. the lens passes through focus, the open double-sided sharp pulse indicated generally at 300 is generated by the signal recovery subsystem 30 as the lens passes through focus. This is shown by the vertical line 301 connecting the top of the pulse 300 with the point on line 292 indicating that the lens has passed through the infocus position as indicated by its intersection with the dotted line 294. Corresponding to the description previously given with reference to line C of Figure 6A, the lens passes through focus and the sharp pulse retracts to its no activity level indicated generally at 30.

The waveform shown on line G of Figure 6A illustrates the output from the FM distribution amplifier on the line 66 in the second condition, i.e. when the lens acquires focus. This is indicated by the envelope generally represented by the crossed hatched sections between lines 304 and 306.

Referring to the waveform shown on line H of Figure 6A, there is shown a dash/dot line 308 representing the output from the FM level detector 270 corresponding to that situation when the lens does not acquire focus in its first pass through the lens in focus position shown by line 294 of line C of Figure 6A. The output of the level detector represented by the dotted line 311 shows the loss of the FM signal by the detector 270. The solid line 312d shows the presence of an FM signal detected by the FM level detector when the lens acquires focus. The continuing portion of the waveform at 312 indicates that an FM signal is available in the focus servo subsystem 36.

Referring to line I of Figure 6A, there is shown the output characteristic of the focus servo loop switch 256. In the portion of its operating characteristics generally indicated by the portion of the line indicated at 314, the switch is in·the off condition representing the unfocused condition. The position of the line 316 represents the focused condition. The vertical transition at 318 indicates the time at which focus is acquired.

While focus may be achieved using only the differential focus error signal on line 38, Figure 3, the present invention utilises the differential focus error signal in combination with a kick-back signal to achieve more reliable acquisition of focus during each attempt at focus.

The signal representing the differentiation of the idealised focus error is applied to the generator 252, Figure 5, for activating the generator 252 to generate its kick-back waveform. The output from the FM level detector 270 is an alternative input to the kickback generator for generating the kickback waveform for application to the driver 260.

Alternatively, the generation of the oscillatory kick-back waveform can be triggered a fixed time after the initiation of the ramp signal 286.

Referring back to line B of Figure 6A, it can be seen how the output signal from the ramp generator 278 moves the lens through the optimum focusing range. This is a sawtooth signal and it is calculated to move the lens smoothly through the point at which FM is detected by the FM level detector 270 as indicated by the waveform on line H of Figure 6A. The focus ramp follows a dot/dash portion 287 of the waveform to a point 287a corresponding to the time at which, with the aid of kickback, focus is acquired. At this moment the FM level detector generates the signal level at 312a in line H and the output signal from the acquire focus logic block 272 turns off the ramp generator over the lines 280. When focus is acquired, the output from the ramp generator follows the dash line portion at 287b indicating that focus has been acquired.

Referring to line A of Figure 6B, a portion of the focus ramp is shown extending between a first upper voltage at 286 and a second lower voltage at 288. The optimum focus point is located at 287a and corresponds with the peak of the FM signal applied to the FM level detector 270 as shown on line C of Figure 6B. Line B is a simplified version of the lens position transfer function 290 as shown more specifically with reference to line C of Figure 6A. The lens position transfer function line 290 extends between an upper limit of lens travel indicated at point 292 and lower limit of lens travel indicated at point 295. The optimum lens focus position is indicated by a line 294. The optimum lens focus point is therefore located at 299.

Referring to line D of Figure 6B, there is shown the superposing of the kickback sawtooth waveform indicated generally in the area 300 upon the lens position transfer line 292. This indicates that the top portion of the three kickback pulses is located at 302, 304 and 306. The lower portion of the three kickback pulses are located at 308, 310 and 312, respectively. The line 294 again shows the point of optimum focus. The intersection of the line 294 with the line 292 at points 294a, 294b, 294c and 294d shows that the lens itself passes through the optimum lens focus position a plurality of times during one acquire focus enable function.

Referring to line E of Figure 6B, the input to the FM level detector indicates that during an oscillatory motion of the lens through the optimum focus position as shown by the combined lens travel function characteristic shown in Figure D, the lens has the opportunity to acquire focus of the FM signal at four locations indicated at the peaks of waveforms 314, 316, 318 and 320.

The waveforms shown with reference to FIGURE 6B demonstrate that the addition of a high frequency oscillating sawtooth kickback pulse upon the ramping signal generated by the ramp generator 278 causes the lens to pass through the optimum lens focus position a plurality of times for each attempt at acquiring lens focus. This improves the reliability of achieving proper lens focus during each attempt.

In the recovery of FM video information from video disc surface 5, imperfections on the disc surface can cause a momentary loss of the FM signal being recovered. A gating means is provided in the lens servo subsystem 36 for detecting this loss of FM from the recovered FM video signal. This FM detecting means momentarily delays the reactivation of the acquire focus mode of operation of the lens servo subsystem 36 for a predetermined time. During this predetermined time, the reacquisition of the FM signal prevents the FM detector means from causing the servo subsystem to restart the acquire focus mode of operation. In the event that FM is not detected during this predetermined time, the FM detector means reactivates the ramp generator for generating the ramping signal which causes the lens to follow through the acquire focus procedure. At the end of the ramp generator period, the FM detector means provides a further signal for resetting the ramp generator to its initial position and to follow through the ramping and acquire focus procedure.

**Claims**

1. A focus servo system in a player apparatus for deriving information recorded on an information bearing surface, the player apparatus comprising optical means (2) including an objective lens for focusing a source beam (4) of radiation on the information bearing surface (7) and signal recovery means (30) for receiving the source beam after modulation by the information bearing surface and for developing an electrical output signal representing the recorded information, said focus servo system including focus error detection means (408) for detecting the position of the objective lens relative to an optimum focus position and for generating a focus error signal (38) a lens driver (260) for moving the objective lens relative to the information bearing surface along the path of the source beam, a switch (256) for selectively connecting the focus error signal to the lens driver, signal detection means (270) for activating the switch upon the detection of information by the signal recovery means and a ramp generator (278) coupled to the lens driver for causing the lens to move over a defined range including the optimum focus position until an information signal is detected characterised by kick back means (252) coupled to the lens driver for selectively superimposing a relatively high frequency oscillatory motion on the motion caused by the ramp generator, the amplitude and frequency of the oscillatory motion being such that the objective lens scans back and forth past the optimum focusing position several times each time the lens traverses said range until the optimum focus position is detected and the switch (256) is activated.

2. A system as claimed in Claim 1 wherein the kickback means includes a generator having means for triggering said oscillatory motion a fixed time after initiation of a ramp signal from the ramp generator.

3. A system as claimed in either preceding claim, wherein the signal detection means (270) triggers the kickback means (252) to initiate the oscillatory motion upon detection of the information signal.

4. A system as claimed in any preceding claim, further including focus control logic means (272) responsive to the signal detection means (270) for disabling the ramp generator (278) upon dectection of the optimum focusing position.

5. A system as claimed in Claim 4, wherein said focus logic control means (272) causes the ramp generator (278) to restart the focus acquisition movement of the lens if the lens reaches the limit of its travel without the optimum focusing position being detected.

6. A system as claimed in Claim 4, wherein the focus logic means (272) includes means for restarting the focus acquisition motion, if the signal detection means (270) detects loss of information for more than a predetermined amount of time.

7. A method of achieving focus in a player apparatus for deriving information recorded on an information bearing surface and including an objective lens for focusing a beam of radiation on the surface, in which a focus error signal is generated and is selectively connected to a lens driver by a switch for driving the lens in an attempt to achieve focus of the lens on the surface, and a ramp signal is used to drive the lens through a range of positions including the focus position, characterised in that when focus is approached under control of this ramp signal, a relatively high frequency oscillatory motion is superimposed on the lens, the amplitude and frequency of the oscillatory motion being such that the objective lens scans back and forth past the optimum focusing position several times each time the lens traverses said range until the optimum focus position is detected, at which moment the ramp signal is prevented from further changing its amplitude and the switch (256) is activated to connect the focus error signal to the lens driver.

## Revendications

1. Servosystème de focalisation dans un dispositif de restitution pour dériver une information enregistrée sur une surface porteuse de l'information, le dispositif de restitution comprenant un moyen optique (2) comportant un objectif pour focaliser une source d'un faisceau (4) de rayonnement sur la surface porteuse de l'information (7) et un moyen de restitution de signaux (30) pour recevoir le faisceau de la source après modulation par la surface porteuse de l'information et pour développer un signal électrique de sortie représentant l'information enregistrée, ledit servosystème de focalisation comprenant un moyen de détection d'erreur de focalisation (408) pour détecter la position de l'objectif par rapport à une position optimale de focalisation et pour produire un signal d'erreur de focalisation (38), un moyen d'entraînement (260) de la lentille pour déplacer l'objectif par rapport à la surface porteuse de l'information le long de la trajectoire du faisceau de la source, un commutateur (256) pour appliquer sélectivement le signal d'erreur de focalisation à l'étage d'entraînement de la lentille, un moyen de détection de signaux (270) pour actionnner le commutateur lors de la détection d'une information par le moyen de restitution de signaux et un générateur de rampe (278) couplé à l'étage d'entraînement de la lentille pour forcer la lentille à se déplacer sur une gamme définie comprenant la position de focalisation optimale jusqu'à ce qu'un signal d'information soit détecté, caractérisé par un moyen de retour en arrière (252) couplé à l'étage d'entraînement de la lentille pour sélectivement superposer un mouvement oscillant à relativement haute fréquence sur le mouvement provoqué par le générateur de rampe, l'amplitude et la fréquence du mouvement oscillant étant telles que l'objectif explore d'avant en arrière au-delà de la position optimale de focalisation, plusieurs fois, à chaque fois que la lentille traverse ladite gamme jusqu'à ce que la position de focalisation optimale soit détectée et le commutateur (256) est actionné.

2. Système selon la revendication 1 où le moyen de retour en arrière comprend un générateur ayant un moyen pour déclencher ledit mouvement oscillant un temps fixe après initialisation d'un signal en rampe par le générateur de rampe.

3. Système selon l'une quelconque des revendications précédentes où le moyen de détection de signaux (270) déclenche le moyen de retour en arrière (252) pour amorcer le mouvement oscillant lors de la détection du signal d'information.

4. Système selon l'une quelconque des revendications précédentes, comprenant de plus un moyen logique de commande de focalisation (272) répondant au moyen de détection de signaux (270) pour inhiber le générateur de rampe (278) lors de la détection de la position optimale de focalisation.

5. Système selon la revendication 4 où ledit moyen de commande logique de focalisation (272) force le générateur de rampe (278) à recommencer le mouvement d'acquisition de focalisation de la lentille si la lentille atteint la limite de son parcours sans que la position de focalisation optimale soit détectée.

6. Système selon la revendication 4 où le moyen logique de focalisation (272) comprend un moyen pour redébuter le mouvement d'acquisition de focalisation, si le moyen de détection de signaux (270) détecte la perte d'information pendant plus d'une quantité prédéterminée de temps.

7. Méthode pour obtenir la focalisation dans un dispositif de restitution pour dériver une information enregistrée sur une surface porteuse de l'information et comprenant un objectif pour focaliser un faisceau de rayonnement sur la surface, où un signal d'erreur de focalisation est produit et est sélectivement appliqué à un étage d'entraînement de la lentille par un commutateur pour entraîner la lentille dans une tentative pour obtenir la focalisation de la lentille sur la surface, et un signal en rampe est utilisé pour entraîner la lentille à travers une gamme de positions comprenant la position de focalisation, caractérisée en ce qu'à l'approche de la focalisation sous le contrôle du signal en rampe, un mouvement oscillant à relativement haute fréquence est superposé sur la lentille, l'amplitude et la fréquence du mouvement oscillant étant telles que l'objectif explore d'avant en arrière au-delà de la position de focalisation optimale plusieurs fois à chaque fois que la lentille traverse ladite gamme jusqu'à ce que la position de focalisation optimale soit détectée et à ce moment le signal en rampe ne peut plus changer d'amplitude et le commutateur (256) est activé, pour appliquer le signal d'erreur de focalisation à l'étage d'entraînement de la lentille.

## Patentansprüche

1. Scharfeinstellungs-Servosystem in einem Abspielgerät zum Gewinnen von Informationen, die auf einer Informationsträgerfläche aufgezeichnet sind, mit einer optischen Einrichtung (2), die eine Objektivlinse zum Scharfeinstellen eines von einer Quelle ausgehenden Strahlungsbündels (4) auf der Informationsträgerfläche (7) enthält, und mit einer Signalgewinnungseinrichtung (30), die das Strahlungsbündel nach dessen Modulation durch die Informationsträgerfläche empfängt und ein elektrisches Ausgangssignal bildet, das die aufgezeichnete Information darstellt, wobei das Scharfeinstellungs-Servosystem eine Scharfeinstellungsfehler-Nachweisenrichtung (408) für den Nachweis der Position der Objektivlinse bezüglich einer Scharfeinstellungs-Bestposition und zum Erzeugen eines Scharfeinstellungs-Fehlersignals (38) aufweist, einen Objektivantrieb (260) zum Bewegen der Objektivlinse gegenüber der Informationsträgerfläche längs der Fortpflanzungsrichtung des Strahlungsbündels, einen Schalter (256), um wahlweise dem Objektivantrieb das Scharfeinstellungs-Fehlersignal zuzuführen, ferner eine Signalnachweiseinrichtung (270) zum Betätigen des Schalters aufgrund des Nachweises von Information durch die Signalgewinnungseinrichtung und einen Sägezahngenerator (278), der mit dem Objektivantrieb gekoppelt ist, so daß das Objektiv über einen vorgegebenen, die Scharfeinstellungs-Bestposition enthaltenden Bereichbewgbar ist, bis ein Informationssignal nachgewiesen wird, gekennzeichnet durch eine Rückstoßeinrichtung (252), die mit dem Objektivantrieb verbunden ist, um der durch den Sägezahngenerator hervorgerufenen Bewegung wahlweise eine Schwingbewegung mit verhältnismäßig hoher Frequenz zu überlagern, und daß Amplitude und Frequenz der Schwingbewegung so gewählt sind, daß das Objektiv immer, wenn es diesen Bereich überstreicht, mehrere Male über die Scharfeinstellungs-Bestposition hinweg abtastet, bis die Position der besten Scharfeinstellung ermittelt und der Schalter (256) betätigt ist.

2. System nach Anspruch 1, dadurch gekennzeichnet, daß die Rückstoßeinrichtung einen Generator umfaßt, der eine Einrichtung zum Auslösen der Schwingbewegung zu einer festgesetzten Zeit nach dem Einsatz einer Sägezahnsignals von dem Sägezahngenerator besitzt.

3. System nach Anspruch 1 oder 2, dadurch gekennzeichnet, daß die Signalnachweisenrichtung (270) die Rückstoßeinrichtung (252) auslöst, um die Schwingbewegung bei nachweis des Informationssignals einzuleiten.

4. System nach einem der vorhergehenden Ansprüche, gekennzeichnet durch eine zur Scharfeinstellungsregelung dienende Logikschaltung (272), die auf die Signalnachweiseinrichtung (270) anspricht und den Sägezahngenerator (278) aufgrund des Nachweises der Bestposition der Scharfeinstellung abschaltet.

5. System nach Anspruch 4, dadurch gekennzeichnet, daß die Logikschaltung (272) zur Scharfeinstellung den Sägezahngenerator (278) veranlaßt, die Scharfeinstellungs-Erfassungsbewegung des Objektivs wieder aufzunehmen, wenn das Objektiv die Grenze seiner Bahnbewegung erreicht, ohne daß die Bestposition der Scharfeinstellung festgestellt ist.

6. System nach Anspruch 4, dadurch gekennzeichnet, daß die Logikschaltung (272) zur Scharfeinstellung eine Einrichtung aufweist, die zum Wiederbeginn der Scharfeinstellungs-Erfassungsbewegung führt, wenn die Signalnachweiseinrichtung (270) einen länger als eine vorbestimmte Zeitspanne andauernden Informationsverlust feststellt.

7. Verfahren zum Herbeiführen der Scharfeinstellung bei einem Abspielgerät zum Gewinnen von auf einer Informationsträgerfläche aufgezeichneten Informationen, mit einer Objektivlinse zum Scharfeinstellen eines Strahlungsbündels auf der Fläche, wobei ein Scharfeinstellungsfehlersignal erzeugt und wahlweise einem Objektivantrieb durch einen Schalter zugeleitet wird, um das Objektiv anzutreiben mit dem Ziel, der Scharfeinstellung des Objektivs auf die Fläche herbeizuführen, und wobei ein Sägezahnsignal eingesetzt wird, um das Objektiv über einen Bereich von Positionen, der die Scharfeinstellungsposition einschließt, zu bewegen, dadurch gekennzeichnet, daß, wenn die Scharfeinstellung unter der Kontrolle des Sägezahnsignals fast erreicht ist, dem Objektiv eine Schwingbewegung von verhältnismäßig hoher Frequenz überlagert wird, wobei die Amplitude und die Frequenz der Schwingbewegung so gewählt sind, daß die Objektivlinse immer dann mehrere Male vorwärts und rückwärts über die Bestposition der Scharfeinstellung hinweg abtastet, wenn das Objektiv diesen Bereich überstreicht, bis die Bestposition der Scharfeinstellung ermittelt ist, in welchem Zeitpunkt das Sägezahnsignal daran gehindert wird, seine Amplitude weiterhin zu verändern, und der Schalter (256) betätigt wird, um das Scharfeinstellungs-Fehlersignal dem Objektivantrieb zuzuführen.

FIG.1

FIG. 2

FIG. 3

0 036 222

FIG. 4

FIG. 5

FIG. 6A

FIG. 6B